# EUROPÄISCHE PATENTSCHRIFT

(11) **EP 4 607 848 B1**
(45) Veröffentlichungstag und Bekanntmachung des Hinweises auf die Patenterteilung: **19.08.2026**
(21) Anmeldenummer: 25158491.8
(22) Anmeldetag: 18.02.2025
(51) Int. Cl.: H04L 9/32, H04L 9/40, G06F 21/33, G06F 21/34

(54) **VERFAHREN UND VORRICHTUNG ZUM BEREITSTELLEN EINES ATTRIBUTS EINES ID-TOKENS SOWIE COMPUTERPROGRAMMPRODUKT**
METHOD AND DEVICE FOR PROVIDING AN ATTRIBUTE OF AN ID TOKEN, AND COMPUTER PROGRAM PRODUCT
PROCÉDÉ ET DISPOSITIF DE FOURNITURE D'UN ATTRIBUT D'UN JETON D'IDENTIFICATION ET PRODUIT PROGRAMME INFORMATIQUE

(30) Priorität: 23.02.2024 DE 102024105224
(43) Veröffentlichungstag der Anmeldung: 27.08.2025
(73) Patentinhaber: Bundesdruckerei GmbH, 10969 Berlin (DE)
(72) Erfinder: STRITZKE, Ronny, Raguhn-Jeßnitz (DE)
(74) Vertreter: Bittner, Thomas L.

(56) Entgegenhaltungen:
- DE-A1- 102008 000 067
- DE-B4- 102008 042 262
- US-A1- 2015 332 029

## Beschreibung

Die Erfindung betrifft ein Verfahren und eine Vorrichtung zum Bereitstellen mindestens eines in einem ID-Token gespeicherten Attributs sowie ein Computerprogrammprodukt.

### Hintergrund

Solche Technologien können von Personen zum Identitätsmanagement in vernetzten Computersystemen eingesetzt werden, beispielsweise dem Internet. Das Identitätsmanagement befasst sich hierbei vornehmlich mit der Verwaltung von Benutzerdaten, die einer Person zugeordnet sind. Der ID-Token (ID - Identität), welcher einer Person zugeordnet ist und für die Person identitätsbezogene Attribute umfasst, unterstützt die Person beim Identitätsmanagement. Zu den identitätsbezogenen Attributen gehören zum Beispiel Name, Alter, Geschlecht und Wohnadresse. Der ID-Token kann hierbei hinsichtlich seiner Struktur oder seines Aufbaus vorgegebenen Standards folgen, zum Beispiel ein JSON Web-Token (JWT) sein, also auf dem Standard RFC7519 beruhen.

In einer Anwendung können die Attribute des der Person zugeordneten ID-Tokens von der Person verwendet werden, um in einem Computer-Netzwerk einen Dienst anzufordern und zu nutzen. Die Person identifiziert sich anhand eines oder mehrerer Attribute aus dem ID-Token, worauf ein Anbieter des Dienstes (Dienstanbieter) den angeforderten Dienst bereitstellen kann. Das Identitätsmanagement erfordert einen sicheren Umgang mit dem ID-Token sowie den im ID-Token gespeicherten Attributen, insbesondere hinsichtlich des Datenschutzes.

Aus dem Dokument DE 10 2008 000 067 C5 ist ein Verfahren zum Lesen eines in einem ID-Token gespeicherten Attributs bekannt, wobei der ID-Token einem Nutzer zugeordnet ist. Bei dem Verfahren authentifiziert sich der Nutzer zunächst gegenüber dem ID-Token, welcher in einem dem Nutzer zugeordneten Nutzer-Computersystem bereitgestellt wird. Weiterhin authentifiziert sich ein ID-Provider-Computersystem gegenüber dem ID-Token. Nach erfolgreicher Authentifizierung des Nutzers und des ID-Provider-Computersystems gegenüber dem ID-Token liest das ID-Provider-Computersystem ein im ID-Token gespeichertes Attribut. Hierbei ist vorgesehen, dass das gelesene Attribut durch das ID-Provider-Computersystem signiert wird. Weiterhin wird das signierte Attribut von dem ID-Provider-Computersystem an ein Dienst-Computersystem übertragen, welches einem Dienstanbieter zugeordnet ist. Die Authentifizierung des ID-Provider-Computersystems gegenüber dem ID-Token erfolgt mit Hilfe eines Zertifikats des ID-Provider-Computersystems. Das Zertifikat umfasst eine Angabe derjenigen, in dem ID-Token gespeicherten Attribute, für welche das ID-Provider-Computersystem für den Lesezugriff berechtigt ist. Der ID-Token prüft diese Leseberechtigung des ID-Provider-Computersystems für den Lesezugriff auf das Attribut mit Hilfe des Zertifikats.

### Zusammenfassung

Aufgabe der Erfindung ist es, ein Verfahren und eine Vorrichtung zum Bereitstellen mindestens eines in einem ID-Token gespeicherten Attributs sowie ein Computerprogrammprodukt anzugeben, welche eine sichere Bereitstellung des mindestens einen Attributs für eine Inanspruchnahme eines Dienstes durch den Nutzer ermöglichen.

Zur Lösung sind ein Verfahren und eine Vorrichtung zum Bereitstellen mindestens eines in einem ID-Token gespeicherten Attributs gemäß den Ansprüchen 1 und 14 geschaffen. Weiterhin ist ein Computerprogrammprodukt gemäß Anspruch 15 vorgesehen. Ausgestaltungen sind Gegenstand von abhängigen Unteransprüchen.

Nach einem Aspekt ist ein Verfahren zum Bereitstellen mindestens eines in einem ID-Token gespeicherten Attributs geschaffen, wobei der ID-Token einem Nutzer zugeordnet ist und wobei das Verfahren Folgendes aufweist: Empfangen einer Nutzer-Dienstanforderung für einen Dienst eines Dienstanbieters in einem ersten Computersystem; Bereitstellen eines dem Nutzer zugeordneten ID-Tokens, welcher Attribute aufweist, in dem ersten Computersystem; Empfangen einer Einmal-Token-Anforderung von dem ersten Computersystem in einem zweiten Computersystem, wobei die Einmal-Token-Anforderung den ID-Token aufweist; Erzeugen eines verschlüsselten Einmal-ID-Tokens in dem zweiten Computersystem, wobei hierbei mindestens eines der Attribute des ID-Tokens gelesen wird, der Einmal-ID-Token das mindestens eine Attribut aufweisend erzeugt wird und der Einmal-ID-Token verschlüsselt wird; Empfangen des verschlüsselten Einmal-ID-Tokens in dem ersten Computersystem; Empfangen einer Dienstanforderung für den Dienst des Dienstanbieters von dem ersten Computersystem in einem dritten Computersystem, wobei die Dienstanforderung den verschlüsselten Einmal-ID-Token und einen den Dienst anzeigenden Dienstanzeiger umfasst; Empfangen einer Entschlüsselungsanforderung für den verschlüsselten Einmal-ID-Token von dem dritten Computersystem in dem zweiten Computersystem, wobei die Entschlüsselungsanforderung den verschlüsselten Einmal-ID-Token umfasst; Lesen des mindestens einen Attributs aus dem Einmal-ID-Token in dem zweiten Computersystem, wobei hierbei der verschlüsselte Einmal-ID-Token entschlüsselt wird; und Empfangen einer Attributnachricht von dem zweiten Computersystem in dem dritten Computersystem, wobei die Attributnachricht das mindestens eine Attribut umfasst.

Nach einem weiteren Aspekt ist eine Vorrichtung zum Bereitstellen mindestens eines in einem ID-Token gespeicherten Attributs geschaffen, wobei der ID-Token einem Nutzer zugeordnet ist. Die Vorrichtung weist ein erstes Computersystem, ein zweites Computersystem und ein drittes Computersystem auf, die eingerichtet sind, über ein Netzwerk Daten zu übertragen. Die Vorrichtung ist für Folgendes eingerichtet: Empfangen einer Nutzer-Dienstanforderung für einen Dienst eines Dienstanbieters in dem ersten Computersystem; Bereitstellen eines dem Nutzer zugeordneten ID-Tokens, welcher Attribute aufweist, in dem ersten Computersystem wird; Empfangen einer Einmal-Token-Anforderung von dem ersten Computersystem in dem zweiten Computersystem, wobei die Einmal-Token-Anforderung den ID-Token aufweist; Erzeugen eines verschlüsselten Einmal-ID-Tokens in dem zweiten Computersystem, wobei hierbei mindestens eines der Attribute des ID-Tokens gelesen wird, der Einmal-ID-Token das mindestens eine Attribut aufweisend erzeugt wird und der Einmal-ID-Token verschlüsselt wird; Empfangen des verschlüsselten Einmal-ID-Tokens in dem ersten Computersystem; Empfangen einer Dienstanforderung für den Dienst des Dienstanbieters von dem ersten Computersystem in dem dritten Computersystem, wobei die Dienstanforderung den verschlüsselten Einmal-ID-Token und einen den Dienst anzeigenden Dienstanzeiger umfasst; Empfangen einer Entschlüsselungsanforderung für den verschlüsselten Einmal-ID-Token von dem dritten Computersystem in dem zweiten Computersystem, wobei die Entschlüsselungsanforderung den verschlüsselten Einmal-ID-Token umfasst; Lesen des mindestens einen Attributs aus dem Einmal-ID-Token in dem zweiten Computersystem, wobei hierbei der verschlüsselte Einmal-ID-Token entschlüsselt wird; und Empfangen einer Attributnachricht von dem zweiten Computersystem in dem dritten Computersystem, wobei die Attributnachricht das mindestens eine Attribut umfasst.

Weiterhin ist ein Computerprogrammprodukt mit von einem Computersystem ausführbaren Instruktionen zum Durchführen des Verfahrens zum Bereitstellen mindestens eines in einem ID-Token gespeicherten Attributs geschaffen.

Mit dem Verfahren und der Vorrichtung ist es ermöglicht, ausgehend von dem im ersten Computersystem bereitgestellten ID-Token, welcher dem Nutzer zugeordnet ist, als Reaktion auf die Nutzer-Dienstanforderung für einen Dienst eines Dienstanbieters mindestens eines der im ID-Token bereitgestellten Attribute auszulesen und für eine Attributprüfung bereitzustellen, so dass in einem beispielweise dem Dienstanbieter zugeordneten dritten Computersystem das mindestens eine Attribut für die Prüfung bereitgestellt wird. Dieses ermöglicht es dem Dienstanbieter das mindestens eine Attribut aus dem ID-Token zu prüfen, um bei erfolgreicher Prüfung dem Nutzer den angeforderten Dienst schließlich bereitzustellen.

Das zweite Computersystem, in welchem ein Einmal-ID-Token mit dem mindestens einem Attribut erzeugt wird, fungiert als ein Vertrauensanker in der Anordnung der mehreren Computersysteme, welche über das Netzwerk sicher Daten übertragen und austauschen. Der Einmal-ID-Token wird als Reaktion auf die empfange Nutzer-Dienstanforderung angefordert und erzeugt, um das mindestens eine aus dem ID-Token gelesene Attribut auf sichere Art und Weise dem Dienstanbieter bereitzustellen.

Auf dem ersten Computersystem kann der ID-Token zum Beispiel mittels einer als ID-Wallet bezeichneten Software-Applikation bereitgestellt werden. Ein Identity Wallet (ID-Wallet) kann wie eine digitale Brieftasche genutzt werden, um zum Beispiel Personalausweis, Führerschein sowie andere identitätsbezogene digitale Nachweise (allgemein: digitale Identität) darin abzuspeichern. Derartige ID-Wallets sind in verschiedenen Ausführungsformen als solche bekannt. Der ID-Token kann als verschlüsselter ID-Token im ersten Computersystem vorliegen und hierbei mit einem öffentlichen Schlüssel des zweiten Computersystems verschlüsselt sein, was ein Entschlüsseln des ID-Tokens nur durch das zweite Computersystem mit dem zugeordneten privaten Schlüssel des zweiten Computersystems ermöglicht.

Bei einer Ausführungsform des Verfahrens ist weiterhin Folgendes vorgesehen: Abrufen eines öffentlichen Schlüssels des Dienstanbieters von einer Schlüssel-Datenspeichereinrichtung durch das erste Computersystem und Übertragen der Einmal-Token-Anforderung von dem ersten an das zweite Computersystem, derart, dass die Einmal-Token-Anforderung den öffentlichen Schlüssel aufweist.

Nachdem im ersten Computersystem, bei dem es sich zum Beispiel um ein dem Nutzer zugeordnetes Nutzer-Computersystem handelt, die Nutzer-Dienstanforderung für den vom Nutzer gewünschten Dienst empfangen wurde, ruft das erste Computersystem bei diesem Beispiel einen öffentlichen Schlüssel des Dienstanbieters von der Schlüssel-Datenspeichereinrichtung ab. Anhand der empfangenen Nutzer-Dienstanforderung ist im ersten Computersystem der Dienstanbieter erkennbar, sodass für diesen der öffentliche Schlüssel abgerufen werden kann. In der Schlüssel-Datenspeichereinrichtung können öffentliche Schlüssel einer beliebigen Anzahl von Dienstanbietern hinterlegt sein, derart, dass je nach vom Nutzer angefordertem Dienst der öffentliche Schlüssel des zugeordneten Dienstanbieters abgerufen werden kann. Der öffentliche Schlüssel des Dienstanbieters kann dann in einer beispielhaften Ausführung mit der Einmal-Token-Anforderung an das zweite Computersystem übermittelt werden, bei dem es sich zum Beispiel um ein ID-Service-Provider Computersystem handelt, welches insbesondere eingerichtet ist, auf Anforderung den Einmal-ID-Token bereitzustellen. Das zweite Computersystem kann bei dieser oder anderen Ausführungsformen als Vertrauensanker-Computersystem ausgebildet sein.

Der öffentliche Schlüssel des Dienstanbieters kann eine kryptografische Kennung für den Dienstanbieter bilden, anhand der Dienstanbieter erkannt werden kann, beispielweise in dem zweiten Computersystem, wenn dort der öffentliche Schlüssel des Dienstanbieters empfangen wird, insbesondere zusammen mit der Einmal-Token-Anforderung oder als Teil dieser. Der Einmal-ID-Token kann dann für den Dienstanbieter erzeugt werden, welcher im zweiten Computersystem mittels Auswerten oder Lesen des öffentlichen Schlüssel des Dienstanbieters bestimmt oder erkannt wurde.

Bei einer Ausführungsform des Verfahrens ist Folgendes vorgesehen: Verschlüsseln des ID-Tokens in dem ersten Computersystem; Empfangen der Einmal-Token-Anforderung von dem ersten Computersystem in dem zweiten Computersystem, derart, dass die Einmal-Token-Anforderung den verschlüsselten ID-Token aufweist; und Entschlüsseln des verschlüsselten ID-Tokens in dem zweiten Computersystem. Hierbei wird der ID-Token als verschlüsselter ID-Token mit der Einmal-Token-Anforderung an das zweite Computersystem übertragen. Es kann vorgesehen sein, für das zweite Computersystem ein Schlüsselpaar mit öffentlichem Schlüssel und privatem Schlüssel bereitzustellen, derart, dass nach dem Bereitstellen des öffentlichen Schlüssels in dem ersten Computersystem der ID-Token mit dem öffentlichen Schlüssel des zweiten Computersystems verschlüsselt wird. Zum Entschlüsseln des verschlüsselten ID-Tokens im zweiten Computersystem wird sodann der private Schlüssel des zweiten Computersystems verwendet.

Bei einer Ausführungsform des Verfahrens ist weiterhin Folgendes vorgesehen: Verschlüsseln des Einmal-ID-Tokens in dem zweiten Computersystem unter Verwendung eines öffentlichen Schlüssels des zweiten Computersystems und Entschlüsseln des verschlüsselten ID-Tokens in dem zweiten Computersystem unter Verwendung eines privaten Schlüssels des zweiten Computersystems. Der Vertrauensankerstellung entsprechend verschlüsselt das zweite Computersystem den Einmal-ID-Token mit seinem eigenen öffentlichen Schlüssel, so dass der Einmal-ID-Token später nur von dem zweiten Computersystem selbst wieder entschlüsselt werden kann, welches allein über seinen privaten Schlüssel verfügt.

Mindestens eine Datenmenge aus der folgenden Gruppe von Datenmengen kann unter Verwendung einer Ende-zu-Ende-Verschlüsselung übertragen werden: Einmal-Token-Anforderung, verschlüsselter Einmal-ID-Token, Dienstanforderung, Entschlüsselungsanforderung und Attributnachricht. In Ergänzung oder alternativ zum Verschlüsseln des ID-Tokens und / oder zum Verschlüsseln des Einmal-ID-Tokens ist bei diesem Beispiel die Verwendung einer Ende-zu-Ende-Verschlüsselung vorgesehen. In einem Ende-zu-Ende-Verschlüsselungssystem sind die verwendeten kryptografischen Schlüssel ausschließlich den kommunizierenden Computersystemen bekannt. Um dies zu erreichen, kann zum Beispiel vorgesehen sein, dass die beteiligten Computersysteme Daten mit einer vorab festgelegten Zeichenfolge verschlüsseln, die sich "pre-shared secret" nennt. Beispielsweise verwenden PGP (*Pretty Good Privacy)* und DUKPT *(Derived Unique Key per Transaction)* solche Verfahren. Verwendbare Verschlüsselungssysteme können einen geheimen Schlüssel auch mit dem sogenannten Diffie-Hellman-Schlüsselaustausch austauschen. Zum Zweck der Ende-zu-Ende-Verschlüsselung können zum Beispiel open PGP oder S/MIME verwendet werden.

Zum Beispiel kann die Ende-zu-Ende-Verschlüsselung für die Datenkommunikation zwischen folgenden Computersystemen verwendet werden: erstes Computersystem und zweites Computersystem, erstes Computersystem und drittes Computersystem und / oder zweites Computersystem und drittes Computersystem.

Bei einer Ausführungsform des Verfahrens ist Folgendes vorgesehen: Empfangen eines Referenzwertes im ersten Computersystem und Empfangen der Einmal-Token-Anforderung von dem ersten Computersystem in dem zweiten Computersystem, derart, dass die Einmal-Token-Anforderung den Referenzwert aufweist. Der ID-Token kann einen geschützten Speicherbereich aufweisen, in welchem in einer Ausgestaltung ein Referenzwert für die Authentifizierung des Nutzers im Zusammenhang mit dem ID-Token gespeichert sein kann. Alternativ kann der im ID-Token gespeicherte Referenzwert in einem nicht geschützten Speicherbereich abgelegt sein. Bei dem Referenzwert handelt es sich beispielsweise um eine Kennung, insbesondere eine sogenannte persönliche Identifikations-Nummer (PIN) oder ein Passwort, oder um Referenzdaten für ein biometrisches Merkmal des Nutzers, welches für die Authentifizierung des Nutzers verwendet wird.

Im zweiten Computersystem kann dann zum Prüfen einer Berechtigung des Nutzers für die Verwendung des ID-Tokens vorgesehen sein, den im ersten Computersystem vom Nutzer empfangenen Referenzwert mit dem im ID-Token gespeicherten Referenzwert zu vergleichen. Der gespeicherte Referenzwert ist insbesondere nach dem Entschlüsseln des ID-Tokens im zweiten Computersystem für die Prüfung auslesbar. Wenn bestimmt wird, dass die Prüfung positiv ist, also insbesondere im ersten Computersystem vom Nutzer empfangener Referenzwert und im ID-Token gespeicherter Referenzwert übereinstimmen, kann der Einmal-ID-Token im zweiten Computersystem erzeugt werden.

Bei einer Ausführungsform des Verfahrens ist weiter Folgendes vorgesehen: Erzeugen des Einmal-ID-Tokens in dem zweiten Computersystem mit einem Gültigkeitsanzeiger, welcher mindestens ein Gültigkeitsattribut aufweist; Prüfen, ob der Einmal-ID-Token gültig ist, mittels Auswerten des mindestens einen Gültigkeitsattributs auf das Empfangen der Entschlüsselungsanforderung in dem zweiten Computersystem; und Bereitstellen der Attributnachricht für das Übertragen an das dritte Computersystem, wenn beim Prüfen bestimmt wird, dass der Einmal-ID-Token gültig ist.

Der Gültigkeitsanzeiger zeigt anhand des mindestens einen Gültigkeitsattributs Eigenschaften betreffend die Gültigkeit des Einmal-ID-Tokens an. Dieses ermöglicht es, auf das Empfangen der Entschlüsselungsanforderung mit dem verschlüsselten Einmal-ID-Token in dem zweiten Computersystem zu prüfen, ob Gültigkeitsvoraussetzungen gegeben sind, die anhand des mindestens einen Gültigkeitsattributs bestimmt werden können. Nur wenn eine Gültigkeit des Einmal-ID-Tokens bestimmt wird, wird in diesem Beispiel die Attributnachricht mit dem mindestens einen Attribut für das dritte Computersystem bereitgestellt.

Der Gültigkeitsanzeiger kann mindestens ein Gültigkeitsattribut aus der folgenden Gruppe aufweisend erzeugt werden: Gültigkeitsdauer, Gültigkeit für den angeforderten Dienst und Gültigkeit für den Dienstanbieter. Beispielsweise kann die Gültigkeitsdauer mehrere Minuten oder Stunden ab dem Zeitpunkt des Erzeugens des Einmal-ID-Tokens anzeigen. Ergänzend oder alternativ kann ein Gültigkeitsattribut des Gültigkeitsanzeigers die Gültigkeit des Einmal-ID-Tokens für einen oder mehrere Dienste und / oder einen oder mehrere Dienstanbieter anzeigen. Wird beim Prüfen des Gültigkeitsanzeigers festgestellt, dass der Einmal-ID-Token für den vom Nutzer angeforderten Dienst nicht gültig ist, wird keine Attributnachricht bereitgestellt. Ebenso wird verfahren, wenn beim Prüfen festgestellt wird, dass der Einmal-ID-Token für den Dienstanbieter, welcher die Entschlüsselungsanforderung übermittelt hat, nicht gültig ist.

In dem zweiten Computersystem kann von dem ersten Computersystem ein Dienstanfrageanzeiger empfangen werden, wobei der Dienstanfrageanzeiger den vom Nutzer angefragten Dienst und / oder den Dienstanbieter anzeigt. Auf diese Weise kann dem zweiten Computersystem angezeigt werden, welchen Dienst der Nutzer angefordert hat und / oder bei welchem Dienstanbieter der Nutzer den Dienst angefordert hat. Hat der Nutzer die Eröffnung eines Bankkontos angefordert, kann der Dienstanfrageanzeiger den Dienst "Kontoeröffnung" und / oder die Bank anzeigen, bei der das Konto eröffnet werden soll. Die Information kann das zweite Computersystem zum Beispiel beim Erzeugen des Einmal-ID-Tokens auswerten und verwenden. Beispielsweise zum Bereitstellen eines oder mehrerer Attribute aus dem ID-Token, die für den Dienst und / oder den Dienstanbieter gefordert sind.

In einem Beispiel dient der öffentliche Schlüssel des Dienstanbieters als Dienstanfrageanzeiger oder ist Teil hiervon. Der Dienstanbieter ist dann anhand des als kryptografische Kennung dienenden öffentlichen Schlüssels erkennbar.

Bei einer Ausführungsform des Verfahrens ist das Bereitstellen mindestens einer der folgenden Attributspezifikationen in dem zweiten Computersystem vorgesehen: erste Attributspezifikation, welche dem Dienst zugeordnete Attribute aus dem ID-Token anzeigt, und zweite Attributspezifikation, welche dem Dienstanbieter zugeordnete Attribute aus dem ID-Token anzeigt. Der Einmal-ID-Token wird bei diesem Beispiel in dem zweiten Computersystem gemäß der ersten und / oder der zweiten Attributspezifikation erzeugt, derart, dass der Einmal-ID-Token die dem Dienst und / oder die dem Dienstanbieter zugeordneten Attribute aufweist. Eine Attributspezifikation kann ein oder mehrerer identitätsbezogene Attribute angeben, die aus dem ID-Token zu lesen und in den Einmal-ID-Token zu integrieren sind. In einem Beispiel sind die erste und die zweite Attributspezifikation für den Dienst sowie den Dienstanbieter gleich. Alternativ können die Attributspezifikationen für den Dienst und den Dienstanbieter verschieden sein. Unterschiedlichen Diensten, die vom Nutzer anforderbar sind, können verschiedene Attributspezifikationen zugeordnet sein (dienstabhängige Attributspezifikationen).

Der Gültigkeitsanzeiger kann mit einem Gültigkeitsattribut für eine Gültigkeit mindestens einer der Attributspezifikationen erzeugt werden. Das Gültigkeitsattribut zeigt zum Beispiel die Gültigkeit der dem angeforderten Dienst zugeordneten ersten Attributspezifikation an. Alternativ oder ergänzend kann das Gültigkeitsattribut die Gültigkeit der dem Dienstleister zugeordneten zweiten Attributspezifikation anzeigen.

Es kann vorgesehen sein, den Einmal-ID-Token als Reaktion auf das Entschlüsseln des verschlüsselten Einmal-ID-Tokens und das Lesen des mindestens einen Attributs aus dem Einmal-ID-Token für eine weitere Verwendung in dem zweiten Computersystem zu sperren. Nachdem der Einmal-ID-Token in Verbindung mit dem angeforderten Dienst des Dienstanbieters verwendet wurde, wird der Einmal-ID-Token für jegliche weitere Verwendung gesperrt, so dass eine nochmalige Nutzung des Einmal-Tokens unterbunden ist. Dieses unterstützt die sichere Bereitstellung des mindestens einen Attributs aus dem ID-Token nur für den aktuell angeforderten Dienst.

Bei einer Ausgestaltung des Verfahrens kann weiter Folgendes vorgesehen sein: Prüfen einer Nutzungsberechtigung des Nutzers auf das Empfangen der Attributnachricht anhand des mindestens einen Attributs in dem dritten Computersystem und Empfangen einer Dienstbereitstellungsnachricht in dem ersten Computersystem von dem dritten Computersystem, wenn beim Prüfen bestimmt wird, dass der Nutzer berechtigt ist. Auf dem Empfang der Attributnachricht mit dem mindestens einen Attribut in dem dritten Computersystem, welches zum Beispiel dem Dienstanbieter zugeordnet ist, wird im dritten Computersystem anhand des mindestens einen Attributs die Berechtigung des Nutzers für den angeforderten Dienst geprüft. Im Fall einer angeforderten Kontoeröffnung kann dies zum Beispiel eine Prüfung eines notwenigen Mindestalters des Nutzers umfassen. Ist der Nutzer berechtigt, wird die Dienstbereitstellungsnachricht an das erste Computersystem übermittelt, also beispielsweise den das Nutzer-Computersystem, worauf der Nutzer den Dienst in Anspruch nehmen kann.

Die vorangehend in Verbindung mit dem Verfahren zum Bereitstellen des mindestens einen Attributs aus dem ID-Token erläuterten Ausgestaltungen können im Zusammenhang mit der Vorrichtung entsprechend vorgesehen sein.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine schematische Darstellung einer Anordnung von Computersystemen für ein Verfahren zum Bereitstellen mindestens eines in einem ID-Token gespeicherten Attributs;
- Fig. 2: eine schematische Darstellung eines Dienst-Computersystems;
- Fig. 3: eine schematische Darstellung eines ID-Service-Provider-Computersystems;
- Fig. 4: eine schematische Darstellung eines Dienst-Computersystems und
- Fig. 5: eine schematische Darstellung eines beispielhaften Ablaufs für das Verfahren zum Bereitstellen eines in einem ID-Token gespeicherten Attributs auf eine Anforderung eines Dienstes durch einen Nutzer.

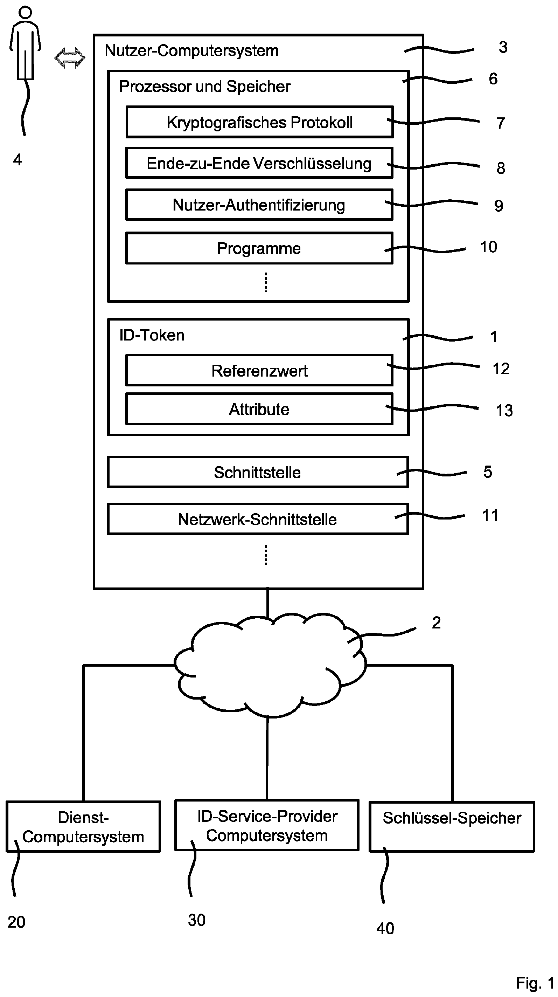

Fig. 1 bis 4 zeigen schematische Darstellungen für eine Anordnung von Computersystemen, die eingerichtet sind, einen oder mehrere in einem ID-Token 1 gespeicherte Attribute bereitzustellen und hierbei Daten über ein Netzwerk 2 auszutauschen. Bei dem Netzwerk 2 kann es sich ein Computernetzwerk handeln, zum Beispiel das Internet.

Gemäß Fig. 1 umfasst die Anordnung ein Nutzer-Computersystem 3 eines Nutzers 4. Bei dem Nutzer-Computersystem 3 kann es sich um einen Personalcomputer, einen tragbaren Computer, wie zum Beispiel einen Laptop, ein mobiles Telekommunikationsgerät, insbesondere Mobiltelefon, oder dergleichen handeln. Das Nutzer-Computersystem 3 weist eine Schnittstelle 5 zur Kommunikation mit dem Nutzer 4 auf.

Das Nutzer-Computersystem 3 umfasst eine Funktionseinheit von Prozessor und Speicher 6 zum Ausführen eines kryptografischen Protokolls 7, einer Ende-zu-Ende-Verschlüsselung 8, einer Nutzer-Authentifizierung 9 sowie weiterer Programme (Programminstruktionen) 10. Zur Kommunikation über das Netzwerk 2 verfügt das Nutzer-Computersystem 3 über eine Netzwerk-Schnittstelle 11.

Der ID-Token 1 weist einen elektronischen Speicher auf, welcher geschützte Speicherbereiche umfassen kann. Der elektronische Speicher dient zum Speichern eines Referenzwertes 12, der für eine Authentifizierung des Nutzers 4 im Zusammenhang dem ID-Token 3 verwendbar ist. Bei dem Referenzwert 12 kann es sich beispielsweise um eine Kennung, insbesondere eine sogenannte persönliche Identifikations-Nummer (PIN) oder ein Passwort, oder um Referenzdaten für ein biometrisches Merkmal des Nutzers 4 handeln, welches für die Authentifizierung des Nutzers 4 gegenüber dem ID-Token 1 verwendet werden kann.

Im ID-Token 1 sind weiterhin Attribute 13 gespeichert, insbesondere im geschützten Speicherbereich. Ist der ID-Token 1 dem Nutzer 4 zugeordnet, zeigen die Attribute 13 identitätsbezogene Attribute oder Eigenschaften des Nutzers 4 an, wie zum Beispiel dessen Name, Wohnort, Geburtsdatum, Geschlecht oder dergleichen. Alternativ oder ergänzend können die Attribute 13 den ID-Token 1 selbst betreffen, zum Beispiel eine Institution anzeigen, die den ID-Token 1 erstellt und ausgegeben hat. Auch eine Gültigkeitsdauer des ID-Tokens 1 und / oder einen Identifikator des ID-Tokens 1 können die Attribute 13 anzeigen, zum Beispiel eine Pass- oder Ausweisnummer oder eine Kreditkartennummer.

Bei einer Ausführung mit Kennung, zum Beispiel in Form eines Passworts, gibt der Nutzer 4 zum Authentifizieren seine Kennung über die Schnittstelle 5 des Nutzer-Computersystems 3 ein.

Alternativ kann ein biometrisches Merkmal des Nutzers 4 erfasst werden. Beispielsweise weist das Nutzer-Computersystem 3 hierzu einen Fingerabdrucksensor (nicht dargestellt) auf oder ist mit einem solchen verbunden. Die für den Nutzer 4 erfassten biometrischen Daten werden bei dieser Ausführungsform mit den im ID-Token 1 gespeicherten biometrischen Referenzdaten verglichen. Bei hinreichender Übereinstimmung der vom Nutzer 4 erfassten biometrischen Daten mit den biometrischen Referenzdaten gilt der Nutzer 4 als authentifiziert und berechtigt, den ID-Token 1 zu verwenden.

Bei dem kryptografischen Protokoll 7 kann es sich zum Beispiel um ein Challenge-Response-Protokoll basierend auf einem symmetrischen oder einem asymmetrischen Schlüsselpaar handeln. Beim kryptografischen Protokoll handelt es sich zum Beispiel um eine *"Authenticated Encryption with Associated Data"* (AEAD) nach RFC7714 oder RFC7539, mit dem der ID-Token zusätzlich abgesichert werden kann, beispielsweise in Ergänzung zur Ende-zu-Ende Verschlüsselung 8.

Programminstruktionen der Ende-zu-Ende-Verschlüsselung 8 können zum Übertragen verschlüsselter Daten zwischen dem Nutzer-Computersystem 3 und einem Dienst-Computersystem 20, einem ID-Service-Provider-Computersystem 30 und / oder einem Schlüssel-Speicher 40 verwendet werden. Auch für die Kommunikation zwischen dem Dienst-Computersystem 20, dem ID-Service-Provider-Computersystem 30 und / oder dem Schlüssel-Speicher 40 kann die Ende-zu-Ende-Verschlüsselung 8 eingesetzt werden Für die Ende-zu-Ende-Verschlüsselung 8 kann ein symmetrischer Schlüssel verwendet werden. In einem Ende-zu-Ende-Verschlüsselungssystem sind die eingesetzten kryptografischen Schlüssel nur den kommunizierenden Parteien (hier Computersystemen) bekannt. Als Techniken für die Ende-zu-Ende-Verschlüsselung können zum Beispiel Open PGP und S/MIME verwendet werden.

Im ID-Service-Provider-Computersystem 30 wird zum Beispiel geprüft (vgl. weitere Erläuterungen unten), ob der Nutzer zur Verwendung des ID-Tokens 1 berechtigt ist. Hierzu empfängt das ID-Service-Provider-Computersystem 30 den vom Nutzer 4 am Nutzer-Computersystem 3 eingegebenen Referenzwert, zum Beispiel Kennung und / oder biometrisches Merkmal, und vergleicht diesen mittels Lesezugriff auf den ID-Token 1, um hierbei den am Nutzer-Computersystem erfassten Referenzwert mit dem im ID-Token 1 gespeicherten Referenzwert 12 zu vergleichen. Für den Fall, dass der eingegebene Referenzwert mit dem Referenzwert 12 übereinstimmt, gilt der Nutzer 4 als zur Verwendung des ID-Tokens 1 berechtigt.

Der ID-Token 1 wird im Nutzer-Computersystem 3 als verschlüsselter ID-Token bereitgestellt, wobei zum Verschlüsseln ein öffentlicher Schlüssel des ID-Service-Provider-Computersystems 30 verwendet wird. Die Bereitstellung des ID-Tokens 1 auf dem Nutzer-Computersystem 3 kann zum Beispiel mittels einer als ID-Wallet bezeichneten Software-Applikation bereitgestellt werden. Ein Identity Wallet (ID-Wallet) kann wie eine digitale Brieftasche genutzt werden, um zum Beispiel Personalausweis, Führer-schein sowie andere identitätsbezogene digitale Nachweise (allgemein: digitale Identität) darin abzuspeichern.

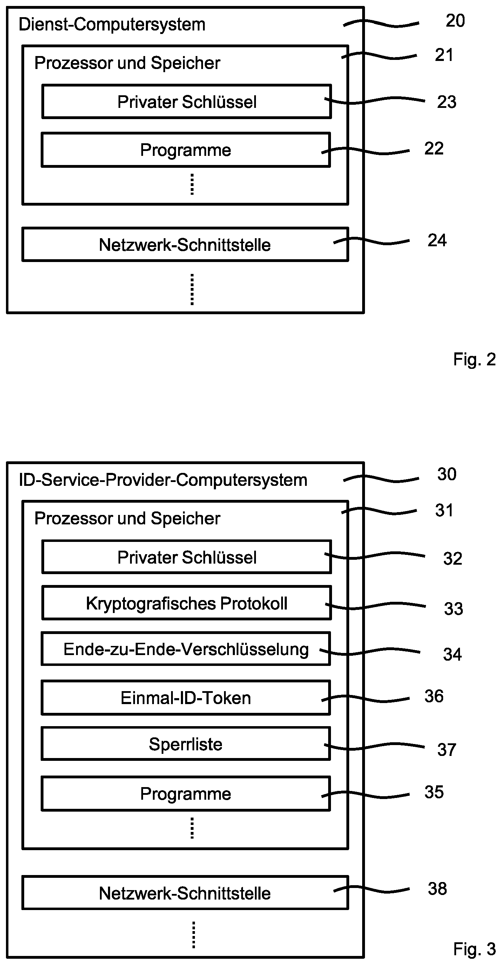

Die Fig. 2 bis 4 zeigen weitere Details für das Dienst-Computersystem 20, das ID-Service-Provider-Computersystem 30 sowie den Schlüssel-Speicher 40.

Gemäß Fig. 2 weist das Dienst-Computersystem 20, welches zum Bereitstellen eines vom Nutzer 4 abrufbaren Dienstes einem Dienstanbieter zugeordnet sein kann, der den Dienst anbietet, eine Funktionseinheit von Prozessor und Speicher 21 auf, die eingerichtet ist, insbesondere Programminstruktionen für Programme 22 auszuführen. Hierzu gehören beispielsweise Programminstruktionen zum Verschlüsseln / Entschlüsseln von Daten, wobei ein privater Schlüssel 23 des Dienst-Computersystems 20 zum Einsatz kommen kann. Für die Datenkommunikation über das Netzwerk 2 verfügt das Dienst-Computersystem 20 über eine Netzwerk-Schnittstelle 24.

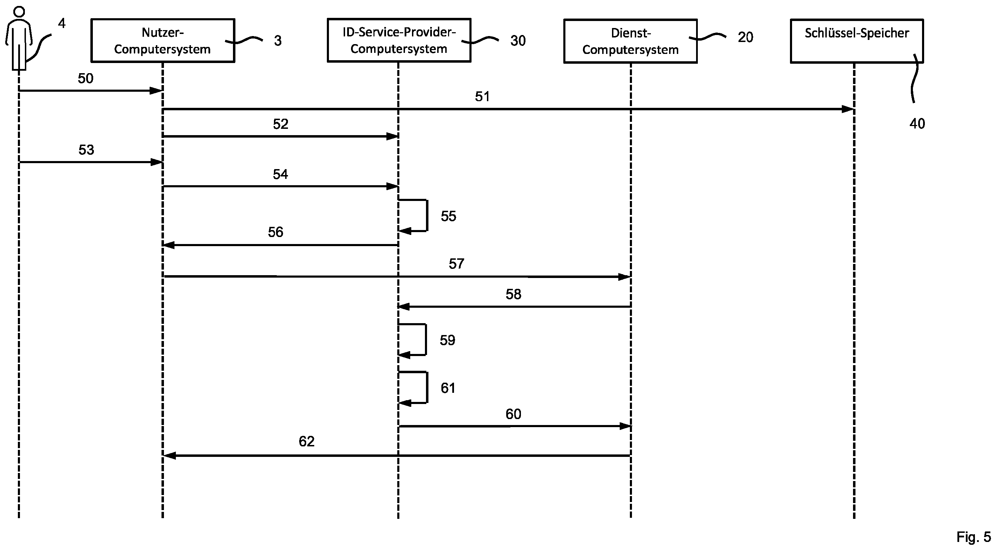

Gemäß Fig. 3 weist das ID-Service-Provider-Computersystem 30 über eine Kombination von Prozessor und Speicher 31, die eingerichtet sind, Programminstruktionen auszuführen. Hierzu gehört beispielsweise die Verwendung eines privaten Schlüssels 32 beim Verschlüsseln von daten sowie das Ausführen eines kryptografischen Protokolls 33 und einer Ende-zu-Ende-Verschlüsselung 34 sowie wahlweise weiterer Programme 35. Des Weiteren ist das ID-Service-Provider-Computersystem 30 eingerichtet, Einmal-ID-Token 36 bereitzustellen, was unten unter Bezugnahme auf Fig. 5 näher erläutert wird. Das Bereitstellen des Einmal-ID-Tokens 36 in Verbindung mit einem vom Nutzer 4 angeforderten Dienst ist Teil der Funktionsbereitstellung eines Vertrauensankers in der Anordnung der Computersysteme gemäß Fig. 1, wofür das ID-Service-Provider-Computersystem 30 eingerichtet ist.

Wurde ein solcher Einmal-ID-Token 36 anwendungsbezogen verwendet, wird er für eine weitere Verwendungen gesperrt, was in dem ID-Service-Provider-Computersystem 30 in einer Sperrliste 37 vermerkt wird. Hierzu kann vorgesehen sein, die bereits verwendeten Einmal-ID-Token in der Sperrliste 37 aufzulisten, so dass bei einer neuer Anforderung in Verbindung mit einem Einmal-ID-Token die Sperrliste 37 durchsucht werden kann, dahingehend, ob dieser Einmal-ID-Token dort schon gelistet ist. Dann wäre dieser nicht erneut nutzbar.

Zur Datenkommunikation über das Netzwerk 2 weist das ID-Service-Provider-Computersystem 30 eine Netzwerk-Schnittstelle 38 auf.

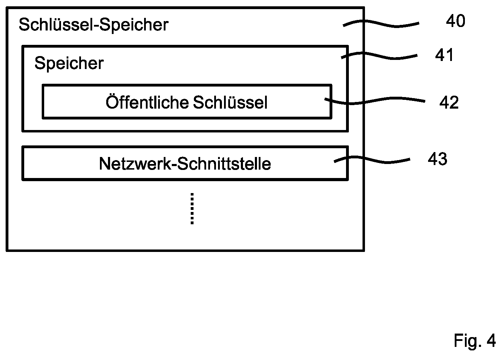

Gemäß Fig. 4 verfügt der Schlüssel-Speicher 40 über einen Speicher 41, in welchem öffentliche Schlüssel 42 gespeichert sind. Beispielsweise können unterschiedliche Dienstanbieter ihren jeweils zugeordneten öffentlichen Schlüssel in dem Schlüssel-Speicher 40 hinterlegen, so dass der jeweilige öffentliche Schlüssel bedarfsweise abgerufen werden kann, insbesondere über eine Netzwerk-Schnittstelle 43 des Schlüssel-Speichers 40. Die öffentlichen Schlüssel werden als JWT (JSON Web Token) innerhalb von DID Dokumenten hinterlegt. Jeder öffentliche Schlüssel ist einem Dienstanbieter eindeutig zugeordnet, so dass mit dem öffentlichen Schlüssel auch eine kryptografische Kennung für den jeweiligen Dienstanbieter bereitgestellt ist. Die öffentlichen Schlüssel basieren zum Beispiel auf einem x.509 Zertifikat.

Die Anordnung der Computersysteme gemäß den Fig. 1 bis 4 ist eingerichtet, mindestens ein in dem ID-Token 1 gespeichertes Attribut 13 bereitzustellen, wenn vom Nutzer 4 im Nutzer-Computersystem 3 eine Nutzer-Dienstanforderung für einen Dienst empfangen wird, welcher von einem Dienstanbieter über das dem Dienstanbieter zugeordnete Dienst-Computersystem 20 angeboten wird. Fig. 5 zeigt einen beispielhaften Verfahrensablauf, welcher nachfolgend erläutert wird. Einzelne oder mehrere der darin gezeigten Schritte können in anderen Ausgestaltungen optional sein, also auch entfallen.

Im Nutzer-Computersystem 3 wird die Nutzer-Dienstanforderung für einen Dienst eines Dienstanbieters empfangen (Schritt 50). Der Dienst ist vom Dienstanbieter über das Dienst-Computersystem 30 bereitstellbar. Beim Dienst kann es sich beispielsweise um eine Dienstleistung oder ein Produkt handeln, insbesondere eine Online-Dienstleistung. Zum Beispiel kann der Nutzer 4 die Eröffnung eines Kontos bei einer Bank oder eine andere Finanz- oder Bankdienstleistung anfordern. Auch ein Kauf in einem Online-Warenhaus zum Erwerb eines Produkts kann einen solchen Dienst darstellen. Ferner kann das Dienst-Computersystem 20 eingerichtet sein, digitale Inhalte auf die Nutzer-Dienstanforderung zu liefern, beispielsweise für den Download von Musik- und / oder Videodaten.

Bei dem gezeigten Beispiel wird auf dem Empfang der Nutzer-Dienstanforderung ein öffentlicher Schlüssel des Dienstanbieters aus dem Schlüssel-Speicher 40 abgerufen (Schritt 51), welcher im Ausführungsbeispiel auch als kryptografische Kennung für den Dienstanbieter dient, dem das Dienst-Computersystem 20 zugeordnet ist.

Im dargestellten Ausführungsbeispiel ist vorgesehen, dass im Schritt 52 im ID-Service-Provider-Computersystem 30 ein Dienstanfrageanzeiger von dem Nutzer-Computersystem 3 empfangen wird, wobei der Dienstanfrageanzeiger den vom Nutzer 4 angefragten Dienst und / oder den diesen Dienst bereitstellen Dienstanbieter anzeigt. Auf diese Weise ist das ID-Service-Provider-Computersystem 30 darüber informiert, welcher Dienst und / oder Dienstanbieter angefragt wurde. Der Dienstanfrageanzeiger kann den zuvor abgerufenen öffentlichen Schlüssel des Dienstanbieters umfassen oder von diesem gebildet sein.

Im Schritt 53 authentifiziert sich der Nutzer 4 für die Verwendung des ID-Tokens 1 (vgl. Fig. 1), welcher mit den gespeicherten Attributen 13 im Nutzer-Computersystem 3 bereitgestellt ist, zum Beispiel in einem ID-Wallet. Der ID-Token 1 kann als verschlüsselter ID-Token im Nutzer-Computersystem 3 vorliegen und hierbei mit einem öffentlichen Schlüssel des ID-Service-Provider-Computersystem 30 verschlüsselt sein. Zum Nachweis seiner Berechtigung gibt der Nutzer 4 am Nutzer-Computersystem 3 den Referenzwert ein, zum Beispiel eine PIN oder ein Passwort. Stimmen eingegebener Referenzwert und gespeicherte Referenzwert 12 aus dem ID-Token 1 überein, ist der Nutzer 4 zur Verwendung des ID-Tokens 1 berechtigt, was im ID-Service-Provider-Computersystem 30, wie nachfolgend erläutert.

Im Schritt 54 wird sodann eine Einmal-Token-Anforderung von dem Nutzer-Computersystem 3 an das ID-Service-Provider-Computersystem 30 übertragen. Die Einmal-Token-Anforderung umfasst in einem Beispiel den vom Nutzer 4 eingegebenen Referenzwert, also beispielweise das Passwort, den vom Schlüssel-Speicher 40 abgerufenen öffentlichen Schlüssel des Dienstanbieters sowie den ID-Token 1.

Der ID-Token 1 wird hierbei bevorzugt als verschlüsselter ID-Token 1 übermittelt. Das Verschlüsseln des ID-Tokens 1 kann in Ergänzung zu einer Ende-zu-Ende-Verschlüsselung für die Datenkommunikation zwischen dem Nutzer-Computersystem 3 und dem ID-Service-Provider-Computersystem 30 vorgesehen sein. Hierbei kann der ID-Token 1 zum Beispiel mit dem öffentlichen Schlüssel des ID-Service-Provider-Computersystem 30 verschlüsselt werden. Auf diese Weise verbleibt der ID-Token 1 wahlweise auch nach dem Empfang im ID-Service-Provider-Computersystem 30 noch verschlüsselt, also nach dem Ende der Transportverschlüsselung basierend auf der Ende-zu-Ende-Verschlüsselung.

Mittels der Einmal-Token-Anforderung wird das ID-Service-Provider-Computersystem 30 aufgefordert, im Nachgang zum Empfang der Nutzer-Dienstanforderung im Nutzer-Computersystem 3, einen Einmal-ID-Token zu erzeugen und bereitzustellen (Schritt 55). Hierbei wird für den im ID-Service-Provider-Computersystem 30 empfangenen verschlüsselten ID-Token 1entschlüsselt, wozu im Fall des Verschlüsselns des ID-Tokens 1 mit dem öffentlichen Schlüssel des ID-Service-Provider-Computersystems 30 der private Schlüssel des ID-Service-Provider-Computersystems 30 verwendet wird.

Sodann wird optional die Berechtigung des Nutzers 4 zur Verwendung des ID-Tokens 1 geprüft. Zu diesem Zweck werden der vom Nutzer 4 am Nutzer-Computersystem 3 eingegebene Referenzwert und der im ID-Token 12 gespeicherte Referenzwert im ID-Service-Provider-Computersystem 30 verglichen. Bei Übereinstimmung wird bestimmt, dass der Nutzer zum Verwenden des ID-Tokens 1 berechtigt ist.

Dann werden ein oder mehrere der Attribute 13 aus dem entschlüsselten ID-Token 1 gelesen und in den angeforderten Einmal-ID-Token übernommen. Zum Bestimmen, welche Attribute in den Einmal-ID-Token zu übernehmen sind, kann vorgesehen sein, in dem ID-Service-Provider-Computersystem 30 eine oder mehrere Attributspezifikationen bereitzustellen, welche zum Beispiel dem vom Nutzer 4 angeforderten Dienst und / oder dem Dienstanbieter zugeordnete Attribute aus dem ID-Token 1 anzeigen. Für unterschiedliche Dienste können so verschiedene Attributzusammenstellungen aus dem ID-Token 1 ausgelesen und in dem Einmal-ID-Token bereitgestellt werden. Der Einmal-ID-Token wird mit einem Gültigkeitsanzeiger erzeugt, welcher ein Gültigkeitsattribut für eine Gültigkeit des Einmal-ID-Tokens aufweist. Das Gültigkeitsattribut kann beispielsweise eine Gültigkeitsdauer, eine Gültigkeit für den angeforderten Dienst und / oder eine Gültigkeit für den dienstanbietenden Dienstanbieter anzeigen. Ergänzend oder alternativ kann das Gültigkeitsattribut die Gültigkeit einer oder mehrerer Attributspezifikationen für den Dienst und / oder den Dienstanbieter repräsentieren.

Der Einmal-ID-Token kann den öffentlichen Schlüssel des Dienstanbieters (des Dienst-Computersystems 20) umfassen.

Der Einmal-ID-Token, wahlweise den öffentlichen Schlüssel des Dienstanbieters umfassend, wird in verschlüsselter Form (verschlüsselter Einmal-ID-Token) im Schritt 56 im Nutzer-Computersystem 3 bereitgestellt und hierfür vom ID-Service-Provider-Computersystem 30 übertragen. Auch hierbei kann die Verschlüsselung des Einmal-ID-Tokens in Ergänzung zu einer Ende-zu-Ende-Verschlüsselung für die Datenkommunikation zwischen den beteiligten Computersystemen vorgesehen sein. Der Einmal-ID-Token kann mit dem öffentlichen Schlüssel des ID-Service-Provider-Computersystems 30 verschlüsselt werden.

Im Schritt 57 wird vom Nutzer-Computersystem 3 eine Dienstanforderung für den vom Nutzer 4 angeforderten Dienst an das Dienst-Computersystem 20 übermittelt. Die Dienstanforderung umfasst neben dem verschlüsselten Einmal-ID-Token einen Dienstanzeiger, welcher mindestens den vom Nutzer 4 angeforderten Dienst anzeigt. Auch für die Übertragung der Dienstanforderung kann eine Ende-zu-Ende-Verschlüsselung vorgesehen sein.

Im Schritt 58 übermittelt das Dienst-Computersystem 20 eine Entschlüsselungsanforderung für den verschlüsselten Einmal-ID-Token an das ID-Service-Provider-Computersystem 30, mit welcher das ID-Service-Provider-Computersystem 30 aufgefordert wird, den verschlüsselten Einmal-ID-Token zu entschlüsseln. Die Entschlüsselungsanforderung umfasst den verschlüsselten Einmal-ID-Token, der hierauf im ID-Service-Provider-Computersystem 30 unter Verwendung des privaten Schlüssels des ID-Service-Provider-Computersystems 30 entschlüsselt wird.

Sodann kann der Einmal-ID-Token im ID-Service-Provider-Computersystem 30 gelesen werden, insbesondere die vom Einmal-ID-Token umfassten Attribute. Dies erfolgt beim gezeigten Beispiel, nachdem der Einmal-ID-Token im Schritt 59 geprüft wird. Hierzu kann der vom Einmal-ID-Token umfasste öffentliche Schlüssel des Dienstanbieters ausgewertet werden, welcher hierbei als kryptografische Kennung für den Dienstanbieter bzw. das Dienst-Computersystem 20 dient.

Wird beim Prüfen bestimmt, dass der Einmal-ID-Token gültig und der Dienstanbieter zum Anfordern des Entschlüsselns des Einmal-ID-Tokens berechtigt ist, so dass die vom Einmal-ID-Token umfassten Attribute dem Dienst-Computersystem 20 bereitgestellt werden können (Schritt 60), wird der Einmal-ID-Token für jegliche weitere Verwendung gesperrt (Schritt 61). Die Sperrung kann vor oder nach dem Senden der Attribute an das Dienst-Computersystem 20 im Schritt 60 erfolgen. Auf diese Weis wird verhindert, dass der Einmal-ID-Token zukünftig für andere Anwendungen nochmals zum Einsatz kommt.

Auf dem Empfang der Attribute stellt das Dienst-Computersystem 20 sodann den vom Nutzer 4 angeforderten Dienst im Nutzer-Computersystem 3 bereit (Schritt 62). Im Dienst-Computersystem 20 können auf Basis der Attribute aus dem ID-Token 1 unterschiedliche Dienste ermöglicht werden. Dies kann zum Beispiel eine Altersprüfung, eine Identifizierung für die Eröffnung eines Bankkontos oder eine Herausgabe medizinischer Daten betreffen.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

### Bezugszeichenliste

- 1: ID-Token
- 2: Netzwerk
- 3: Nutzer-Computersystem
- 4: Nutzer
- 5: Schnittstelle
- 6: Prozessor und Speicher im Nutzer-Computersystem 3
- 7: kryptografisches Protokoll
- 8: Ende-zu-Ende-Verschlüsselung
- 9: Nutzer-Authentifizierung
- 10: Programme
- 11: Netzwerk-Schnittstelle
- 12: Referenzwert
- 13: Attribute
- 20: Dienst-Computersystem
- 21: Prozessor und Speicher im Dienst-Computersystem 20
- 22: Programme
- 23: privater Schlüssel
- 24: Netzwerk-Schnittstelle
- 30: ID-Service-Provider-Computersystem
- 31: Prozessor und Speicher im ID-Service-Provider-Computersystem 30
- 32: privater Schlüssel
- 33: kryptografisches Protokoll
- 34: Ende-zu-Ende-Verschlüsselung
- 35: Programme
- 36: Einmal-ID-Token
- 37: Sperrliste
- 38: Netzwerk-Schnittstelle
- 40: Schlüssel-Speicher
- 41: Speicher im Schlüssel-Speicher 40
- 42: öffentlicher Schlüssel
- 43: Netzwerk-Schnittstelle
- 50 ... 62: Verfahrensschritte

## Patentansprüche

1. Verfahren zum Bereitstellen mindestens eines in einem ID-Token gespeicherten Attributs, wobei der ID-Token einem Nutzer zugeordnet ist und wobei das Verfahren Folgendes aufweist:
- Empfangen einer Nutzer-Dienstanforderung für einen Dienst eines Dienstanbieters in einem ersten Computersystem (3);
- Bereitstellen eines dem Nutzer zugeordneten ID-Tokens, welcher Attribute aufweist, in dem ersten Computersystem (3);
- Empfangen einer Einmal-Token-Anforderung von dem ersten Computersystem (3) in einem zweiten Computersystem (30), wobei die Einmal-Token-Anforderung den ID-Token aufweist;
- Erzeugen eines verschlüsselten Einmal-ID-Tokens in dem zweiten Computersystem (30) auf das Empfangen der Einmal-Token-Anforderung, wobei hierbei
- mindestens eines der Attribute des ID-Tokens gelesen wird,
- der Einmal-ID-Token das mindestens eine Attribut aufweisend erzeugt wird und
- der Einmal-ID-Token verschlüsselt wird;
- Empfangen des verschlüsselten Einmal-ID-Tokens in dem ersten Computersystem (3);
- Empfangen einer Dienstanforderung für den Dienst des Dienstanbieters von dem ersten Computersystem (3) in einem dritten Computersystem (20), wobei die Dienstanforderung den verschlüsselten Einmal-ID-Token und einen den Dienst anzeigenden Dienstanzeiger umfasst;
- Empfangen einer Entschlüsselungsanforderung für den verschlüsselten Einmal-ID-Token von dem dritten Computersystem (20) in dem zweiten Computersystem (30), wobei die Entschlüsselungsanforderung den verschlüsselten Einmal-ID-Token umfasst;
- Lesen des mindestens einen Attributs aus dem Einmal-ID-Token in dem zweiten Computersystem (30), wobei hierbei der verschlüsselte Einmal-ID-Token entschlüsselt wird; und
- Empfangen einer Attributnachricht von dem zweiten Computersystem (30) in dem dritten Computersystem (20), wobei die Attributnachricht das mindestens eine Attribut umfasst.

2. Verfahren nach Anspruch 1, **gekennzeichnet durch**
- Abrufen eines öffentlichen Schlüssels des Dienstanbieters von einer Schlüssel-Datenspeichereinrichtung **durch** das erste Computersystem (3) und
- Übertragen der Einmal-Token-Anforderung von dem ersten an das zweite Computersystem (30), derart, dass die Einmal-Token-Anforderung den öffentlichen Schlüssel aufweist.

3. Verfahren nach Anspruch 1 oder 2, **gekennzeichnet durch**
- Verschlüsseln des ID-Tokens in dem ersten Computersystem (3);
- Empfangen der Einmal-Token-Anforderung von dem ersten Computersystem (3) in dem zweiten Computersystem (30), derart, dass die Einmal-Token-Anforderung den verschlüsselten ID-Token aufweist; und
- Entschlüsseln des verschlüsselten ID-Tokens in dem zweiten Computersystem (30).

4. Verfahren nach mindestens einem der vorangehenden Ansprüche, **gekennzeich** - **net** durch
- Verschlüsseln des Einmal-ID-Tokens in dem zweiten Computersystem (30) unter Verwendung eines öffentlichen Schlüssels des zweiten Computersystems (30) und
- Entschlüsseln des verschlüsselten ID-Tokens in dem zweiten Computersystem (30) unter Verwendung eines privaten Schlüssels des zweiten Computersystems (30).

5. Verfahren nach mindestens einem der vorangehenden Ansprüche, dadurch **gekenn- zeichnet,** dass mindestens eine Datenmenge aus der folgenden Gruppe von Datenmengen unter Verwendung einer Ende-zu-Ende-Verschlüsselung übertragen wird: Einmal-Token-Anforderung, verschlüsselter Einmal-ID-Token, Dienstanforderung, Entschlüsselungsanforderung und Attributnachricht.

6. Verfahren nach mindestens einem der vorangehenden Ansprüche, **gekennzeich** - **net** durch
- Empfangen eines Referenzwertes im ersten Computersystem (3) und
- Empfangen der Einmal-Token-Anforderung von dem ersten Computersystem (3) in dem zweiten Computersystem (30), derart, dass die Einmal-Token-Anforderung den Referenzwert aufweist.

7. Verfahren nach mindestens einem der vorangehenden Ansprüche, **gekennzeich** - **net** durch
- Erzeugen des Einmal-ID-Tokens in dem zweiten Computersystem (30) mit einem Gültigkeitsanzeiger, welcher mindestens ein Gültigkeitsattribut aufweist;
- Prüfen, ob der Einmal-ID-Token gültig ist, mittels Auswerten des mindestens einen Gültigkeitsattributs auf das Empfangen der Entschlüsselungsanforderung in dem zweiten Computersystem (30); und
- Bereitstellen der Attributnachricht für das Übertragen an das dritte Computersystem (20), wenn beim Prüfen bestimmt wird, dass der Einmal-ID-Token gültig ist.

8. Verfahren nach Anspruch 7, **dadurch gekennzeichnet, dass** der Gültigkeitsanzeiger mindestens ein Gültigkeitsattribut aus der folgenden Gruppe aufweisend erzeugt wird: Gültigkeitsdauer, Gültigkeit für den angeforderten Dienst und Gültigkeit für den Dienstanbieter.

9. Verfahren nach mindestens einem der vorangehenden Ansprüche, **gekennzeich** - **net** durch Empfangen eines Dienstanfrageanzeigers in dem zweiten Computersystem (30) von dem ersten Computersystem (3), wobei der Dienstanfrageanzeiger den vom Nutzer angefragten Dienst und / oder den Dienstanbieter anzeigt.

10. Verfahren nach mindestens einem der vorangehenden Ansprüche, **gekennzeich** - **net** durch
- Bereitstellen mindestens einer der folgenden Attributspezifikationen in dem zweiten Computersystem (30): erste Attributspezifikation, welche dem Dienst zugeordnete Attribute aus dem ID-Token anzeigt, und zweite Attributspezifikation, welche dem Dienstanbieter zugeordnete Attribute aus dem ID-Token anzeigt; und
- Erzeugen des Einmal-ID-Tokens in dem zweiten Computersystem (30) gemäß der ersten und / oder der zweiten Attributspezifikation, derart, dass der Einmal-ID-Token die dem Dienst und / oder die dem Dienstanbieter zugeordneten Attribute aufweist.

11. Verfahren nach Anspruch 7 und 10, **dadurch gekennzeichnet, dass** der Gültigkeitsanzeiger mit einem Gültigkeitsattribut für eine Gültigkeit mindestens einer der Attributspezifikationen erzeugt wird.

12. Verfahren nach mindestens einem der vorangehenden Ansprüche, **gekennzeich** - **net** durch Sperren des Einmal-ID-Tokens für eine weitere Verwendung in dem zweiten Computersystem (30) auf das Entschlüsseln des verschlüsselten Einmal-ID-Tokens und das Lesen des mindestens einen Attributs aus dem Einmal-ID-Token.

13. Verfahren nach mindestens einem der vorangehenden Ansprüche, **gekennzeich** - **net** durch
- Prüfen einer Nutzungsberechtigung des Nutzers auf das Empfangen derAttributnachricht anhand des mindestens eine Attributs in dem dritten Computersystem (20) und
- Empfangen einer Dienstbereitstellungsnachricht in dem ersten Computersystem (3) von dem dritten Computersystem (20), wenn beim Prüfen bestimmt wird, dass der Nutzer berechtigt ist.

14. Vorrichtung zum Bereitstellen mindestens eines in einem ID-Token gespeicherten Attributs, wobei der ID-Token einem Nutzer zugeordnet ist, aufweisend ein erstes Computersystem (3), ein zweites Computersystem (30) und ein drittes Computersystem (20), wobei die Computersysteme (3, 20, 30) eingerichtet sind, über ein Netzwerk Daten zu übertragen, und wobei die Vorrichtung für Folgendes eingerichtet ist:
- Empfangen einer Nutzer-Dienstanforderung für einen Dienst eines Dienstanbieters in dem ersten Computersystem (3);
- Bereitstellen eines dem Nutzer zugeordneten ID-Tokens, welcher Attribute aufweist, in dem ersten Computersystem (3);
- Empfangen einer Einmal-Token-Anforderung von dem ersten Computersystem (3) in dem zweiten Computersystem (30), wobei die Einmal-Token-Anforderung den ID-Token aufweist;
- Erzeugen eines verschlüsselten Einmal-ID-Tokens in dem zweiten Computersystem (30) auf das Empfangen der Einmal-Token-Anforderung, wobei hierbei
- mindestens eines der Attribute des ID-Tokens gelesen wird,
- der Einmal-ID-Token das mindestens eine Attribut aufweisend erzeugt wird und
- der Einmal-ID-Token verschlüsselt wird;
- Empfangen des verschlüsselten Einmal-ID-Tokens in dem ersten Computersystem (3);
- Empfangen einer Dienstanforderung für den Dienst des Dienstanbieters von dem ersten Computersystem (3) in dem dritten Computersystem (20), wobei die Dienstanforderung den verschlüsselten Einmal-ID-Token und einen den Dienst anzeigenden Dienstanzeiger umfasst;
- Empfangen einer Entschlüsselungsanforderung für den verschlüsselten Einmal-ID-Token von dem dritten Computersystem (20) in dem zweiten Computersystem (30), wobei die Entschlüsselungsanforderung den verschlüsselten Einmal-ID-Token umfasst;
- Lesen des mindestens einen Attributs aus dem Einmal-ID-Token in dem zweiten Computersystem (30), wobei hierbei der verschlüsselte Einmal-ID-Token entschlüsselt wird; und
- Empfangen einer Attributnachricht von dem zweiten Computersystem (30) in dem dritten Computersystem (20), wobei die Attributnachricht das mindestens eine Attribut umfasst.

15. Computerprogrammprodukt mit von einem Computersystem ausführbaren Instruktionen, die bei der Ausführung durch das Computersystem dieses veranlassen ein Verfahren nach mindestens einem der Ansprüche 1 bis 13 durchzuführen.

## Claims

1. A method for providing at least one attribute stored in an ID token, the ID token being associated with a user, the method comprising:
- receiving a user service request for a service of a service provider in a first computer system (3);
- providing an ID token associated with the user and having attributes, in the first computer system (3);
- receiving a one-time token request from the first computer system (3) in a second computer system (30), the one-time token request including the ID token;
- generating an encrypted one-time ID token in the second computer system (30) upon receiving the one-time token request, wherein
- at least one of the attributes of the ID token is read,
- the one-time ID token is generated having the at least one attribute, and
- the one-time ID token is encrypted;
- receiving the encrypted one-time ID token in the first computer system (3);
- receiving a service request for the service of the service provider from the first computer system (3) in a third computer system (20), the service request including the encrypted one-time ID token and a service indicator indicating the service;
- receiving a decryption request for the encrypted one-time ID token from the third computer system (20) in the second computer system (30), the decryption request including the encrypted one-time ID token;
- reading the at least one attribute from the one-time ID token in the second computer system (30), wherein the encrypted one-time ID token is decrypted; and
- receiving an attribute message from the second computer system (30) in the third computer system (20), the attribute message including the at least one attribute.

2. The method of claim 1, **characterized by**
- retrieving, by the first computer system (3), a public key of the service provider from a key data storage device; and
- transmitting the one-time token request from the first to the second computer system (30) such that the one-time token request includes the public key.

3. The method of claim 1 or 2, **characterized by**
- encrypting the ID token in the first computer system (3);
- receiving the one-time token request from the first computer system (3) in the second computer system (30) such that the one-time token request includes the encrypted ID token; and
- decrypting the encrypted ID token in the second computer system (30).

4. The method of at least one of the preceding claims, **characterized by**
- encrypting the one-time ID token in the second computer system (30) using a public key of the second computer system (30); and
- decrypting the encrypted ID token in the second computer system (30) using a private key of the second computer system (30).

5. The method of at least one of the preceding claims, **characterized in that** at least one data set from the following group of data sets is transmitted using end-to-end encryption:
one-time token request, encrypted one-time ID token, service request, decryption request, and attribute message.

6. The method of at least one of the preceding claims, **characterized by**
- receiving a reference value in the first computer system (3); and
- receiving the one-time token request from the first computer system (3) in the second computer system (30) such that the one-time token request includes the reference value.

7. The method of at least one of the preceding claims, **characterized by**
- generating the one-time ID token in the second computer system (30) with a validity indicator having at least one validity attribute;
- checking whether the one-time ID token is valid by evaluating the at least one validity attribute upon receiving the decryption request in the second computer system (30); and
- providing the attribute message for transmission to the third computer system (20) if it is determined during the checking that the one-time ID token is valid.

8. The method of claim 7, **characterized in that** the validity indicator is generated having at least one validity attribute from the following group: validity period, validity for the requested service, and validity for the service provider.

9. The method of at least one of the preceding claims, **characterized by** receiving a service request indicator in the second computer system (30) from the first computer system (3), the service request indicator indicating the service requested by the user and/or the service provider.

10. The method of at least one of the preceding claims, **characterized by**
- providing at least one of the following attribute specifications in the second computer system (30): first attribute specification indicating attributes associated with the service from the ID token, and second attribute specification indicating attributes associated with the service provider from the ID token; and
- generating the one-time ID token in the second computer system (30) according to the first and/or the second attribute specification such that the one-time ID token includes the attributes associated with the service and/or the attributes associated with the service provider.

11. The method of claim 7 and 10, **characterized in that** the validity indicator is generated with a validity attribute for a validity of at least one of the attribute specifications.

12. The method of at least one of the preceding claims, **characterized by** locking the one-time ID token for further use in the second computer system (30) upon decrypting the encrypted one-time ID token and reading the at least one attribute from the one-time ID token.

13. The method of at least one of the preceding claims, **characterized by**
- checking a use authorization of the user upon receiving the attribute message based on the at least one attribute in the third computer system (20), and
- receiving a service provision message in the first computer system (3) from the third computer system (20) if it is determined during the checking that the user is authorized.

14. An apparatus for providing at least one attribute stored in an ID token, the ID token being associated with a user, comprising a first computer system (3), a second computer system (30) and a third computer system (20), wherein the computer systems (3, 20, 30) are configured to transmit data over a network, and wherein the apparatus is configured to:
- receive a user service request for a service of a service provider in the first computer system (3);
- providing an ID token associated with the user and having attributes, in the first computer system (3);
- receiving a one-time token request from the first computer system (3) in the second computer system (30), the one-time token request including the ID token;
- generating an encrypted one-time ID token in the second computer system (30) upon receiving the one-time token request, wherein
- at least one of the attributes of the ID token is read,
- the one-time ID token is generated having the at least one attribute, and
- the one-time ID token is encrypted;
- receiving the encrypted one-time ID token in the first computer system (3);
- receiving a service request for the service of the service provider from the first computer system (3) in the third computer system (20), the service request including the encrypted one-time ID token and a service indicator indicating the service;
- receiving a decryption request for the encrypted one-time ID token from the third computer system (20) in the second computer system (30), the decryption request including the encrypted one-time ID token;
- reading the at least one attribute from the one-time ID token in the second computer system (30), wherein the encrypted one-time ID token is decrypted; and
- receiving an attribute message from the second computer system (30) in the third computer system (20), the attribute message including the at least one attribute.

15. A computer program product comprising instructions executable by a computer system which, when executed by the computer system, cause the computer system to perform a method according to at least one of claims 1 to 13.

## Revendications

1. Procédé de fourniture d'au moins un attribut stocké dans un jeton ID, dans lequel le jeton ID est attribué à un utilisateur et dans lequel le procédé comprend les étapes suivantes :
- la réception d'une requête de service d'utilisateur pour un service d'un fournisseur de services dans un premier système informatique (3) ;
- la fourniture d'un jeton ID, doté d'attributs, attribué à l'utilisateur dans le premier système informatique (3) ;
- la réception d'une requête de jeton à usage unique provenant du premier système informatique (3) dans un deuxième système informatique (30), dans lequel la requête de jeton à usage unique présente le jeton ID ;
- la génération d'un jeton à usage unique chiffré dans le deuxième système informatique (30) à la réception de la requête de jeton ID à usage unique, dans lequel :
- au moins un des attributs du jeton ID est lu,
- le jeton ID à usage unique est généré doté de l'au moins un attribut et
- le jeton ID à usage unique est chiffré ;
- la réception du jeton ID à usage unique chiffré dans le premier système informatique (3) ;
- la réception d'une requête de service pour le service du fournisseur de services provenant du premier système informatique (3) dans un troisième système informatique (20), dans lequel la requête de service comprend le jeton ID à usage unique chiffré et un indicateur de service indiquant le service ;
- la réception d'une requête de déchiffrement du jeton ID à usage unique chiffré provenant du troisième système informatique (20) dans le deuxième système informatique (30), dans lequel la requête de déchiffrement comprend le jeton ID à usage unique chiffré ;
- la lecture de l'au moins un attribut du jeton ID à usage unique dans le deuxième système informatique (30), dans lequel à cette fin le jeton ID à usage unique chiffré est déchiffré ; et
- la réception d'un message d'attribut provenant du deuxième système informatique (30) dans le troisième système informatique (20), dans lequel le message d'attribut comprend l'au moins un attribut.

2. Procédé selon la revendication 1, **caractérisé par** :
- la récupération d'une clé publique du fournisseur de services à partir d'un dispositif de stockage de données de clés par le premier système informatique (3) et
- la transmission de la requête de jeton ID à usage unique du premier système informatique au deuxième système informatique (30), de telle sorte que la requête de jeton à usage unique présente la clé publique.

3. Procédé selon la revendication 1 ou 2, **caractérisé par** :
- le chiffrement du jeton ID dans le premier système informatique (3) ;
- la réception de la requête de jeton à usage unique par le premier système informatique (3) dans le deuxième système informatique (30), de telle sorte que la requête de jeton à usage unique présente le jeton ID chiffré ; et
- le déchiffrement du jeton ID chiffré dans le deuxième système informatique (30).

4. Procédé selon au moins une des revendications précédentes, **caractérisé par** :
- le chiffrement du jeton ID à usage unique dans le deuxième système informatique (30) en utilisant une clé publique du deuxième système informatique (30) et
- le déchiffrement du jeton ID chiffré dans le deuxième système informatique (30) en utilisant une clé privée du deuxième système informatique (30).

5. Procédé selon au moins une des revendications précédentes, **caractérisé en ce qu'**au moins un ensemble de données parmi le groupe suivant d'ensembles de données est transmis par chiffrement de bout en bout : requête de jeton à usage unique, jeton ID à usage unique chiffré, requête de service, requête de déchiffrement et message d'attribut.

6. Procédé selon au moins une des revendications précédentes, **caractérisé par** :
- la réception d'une valeur de référence dans le premier système informatique (3) et
- la réception de la requête de jeton à usage unique provenant du premier système informatique (3) dans le deuxième système informatique (30), de telle sorte que la requête de jeton à usage unique présente la valeur de référence.

7. Procédé selon au moins une des revendications précédentes, **caractérisé par** :
- la génération du jeton ID à usage unique dans le deuxième système informatique (30), muni d'un indicateur de validité, qui présente au moins un attribut de validité ;
- la vérification de la validité du jeton ID à usage unique au moyen de l'évaluation de l'au moins un attribut de validité lors de la réception de la requête de déchiffrement dans le deuxième système informatique (30) ; et
- la fourniture du message d'attribut en vue de la transmission au troisième système informatique (20) si la vérification conclut à la validité du jeton ID à usage unique.

8. Procédé selon la revendication 7, **caractérisé en ce que** l'indicateur de validité est généré en présentant au moins un attribut de validité parmi les suivants : période de validité, validité pour le service demandé et validité pour le fournisseur de services.

9. Procédé selon au moins une des revendications précédentes, **caractérisé par** la réception d'un indicateur de demande de service dans le deuxième système informatique (30) provenant du premier système informatique (3), dans lequel l'indicateur de demande de service affiche le service demandé par l'utilisateur et/ou le fournisseur de services.

10. Procédé selon au moins une des revendications précédentes, **caractérisé par** :
- la fourniture d'au moins une des spécifications d'attributs suivantes dans le deuxième système informatique (30) : une première spécification d'attribut, qui affiche les attributs du jeton ID attribués au service et une deuxième spécification d'attribut, qui affiche les attributs du jeton ID attribués au fournisseur de services ; et
- la génération du jeton ID à usage unique dans le deuxième système informatique (30) conformément à la première et/ou à la deuxième spécification d'attributs, de telle sorte que le jeton ID à usage unique présente les attributs attribués au service et/ou au fournisseur de services.

11. Procédé selon les revendications 7 et 10, **caractérisé en ce que** l'indicateur de validité est généré avec un attribut de validité pour une validité d'au moins une des spécifications d'attributs.

12. Procédé selon au moins une des revendications précédentes, **caractérisé par** le blocage du jeton ID à usage unique afin d'empêcher toute utilisation ultérieure dans le deuxième système informatique (30), pour le déchiffrement du jeton ID À usage unique chiffré et la lecture de l'au moins un attribut du jeton ID à usage unique.

13. Procédé selon au moins une des revendications précédentes, **caractérisé par** :
- la vérification d'une autorisation d'utilisation de l'utilisateur à recevoir le message d'attribut, sur la base de l'au moins un attribut, dans le troisième système informatique (20) ; et
- la réception d'un message de fourniture de service dans le premier système informatique (3) provenant du troisième système informatique (20), si la vérification détermine que l'utilisateur est autorisé.

14. Dispositif de fourniture d'au moins un attribut stocké dans un jeton ID, dans lequel le jeton ID est attribué à un utilisateur, présentant un premier système informatique (3), un deuxième système informatique (30) et un troisième système informatique (20), dans lequel les systèmes informatiques (3, 20, 30) sont configurés pour transmettre des données sur un réseau et dans lequel le dispositif est configuré pour :
- recevoir une requête de service d'utilisateur pour un service auprès d'un fournisseur de services dans le premier système informatique (3) ;
- fournir un jeton ID attribué à l'utilisateur, qui présente des attributs, dans le premier système informatique (3) ;
- recevoir une requête de jeton ID à usage unique du premier système informatique (3) dans le deuxième système informatique (30), dans lequel la requête de jeton à usage unique présente le jeton ID ;
- générer un jeton ID à usage unique chiffré dans le deuxième système informatique (30) à la réception de la requête de jeton ID à usage unique, dans lequel à cette fin :
- au moins un des attributs du jeton ID est lu,
- le jeton ID à usage unique est généré doté de l'au moins un attribut et
- le jeton ID à usage unique est chiffré ;
- la réception du jeton ID à usage unique chiffré dans le premier système informatique (3) ;
- la réception d'une requête de service pour le service du fournisseur de services depuis le premier système informatique (3) dans le troisième système informatique (20), dans lequel la requête de service comprend le jeton ID à usage unique chiffré et un indicateur de service indiquant le service ;
- la réception d'une requête de déchiffrement du jeton ID À usage unique chiffré par le troisième système informatique (20) dans le deuxième système informatique (30), dans lequel la requête de déchiffrement comprend le jeton ID À usage unique chiffré ;
- la lecture, de l'au moins un attribut du jeton ID À usage unique dans le deuxième système informatique (30), dans lequel à cette fin le jeton ID à usage unique chiffré est déchiffré ; et
- la réception d'un message d'attribut par le deuxième système informatique (30) dans le troisième système informatique (20), dans lequel le message d'attribut comprend l'au moins un attribut.

15. Produit de programme informatique comportant des instructions exécutables par un système informatique, qui, lorsqu'elles sont exécutées par le système informatique, amènent ce dernier à exécuter un procédé selon au moins une des revendications 1 à 13.
